Europäisches Patentamt

European Patent Office

Office européen des brevets

(19)

(11) Veröffentlichungsnummer : **0 190 235**
**B1**

(12) **EUROPÄISCHE PATENTSCHRIFT**

(45) Veröffentlichungstag der Patentschrift :
**19.10.88**

(21) Anmeldenummer : **85903818.4**

(22) Anmeldetag : **17.07.85**

(86) Internationale Anmeldenummer :
**PCT/EP 85/00353**

(87) Internationale Veröffentlichungsnummer :
**WO/8601004 (13.02.86 Gazette 86/04)**

(51) Int. Cl.⁴ : **G 02 B 21/24, G 02 B 21/26**

(54) **AUSLESEGERÄT FÜR MIKROSKOPISCHE OBJEKTE, INSBES. MIKROFOSSILIEN.**

(30) Priorität : **18.07.84 DE 3426473**

(43) Veröffentlichungstag der Anmeldung :
**13.08.86 Patentblatt 86/33**

(45) Bekanntmachung des Hinweises auf die Patenterteilung : **19.10.88 Patentblatt 88/42**

(84) Benannte Vertragsstaaten :
**BE FR GB NL**

(56) Entgegenhaltungen :
**DE-A- 3 037 648**
**DE-A- 3 318 959**
**US-A- 3 862 793**

(73) Patentinhaber : **MADER, Hermann**
**Am Eichenwald 66**
**D-8902 Neusäss (DE)**

(72) Erfinder : **MADER, Hermann**
**Am Eichenwald 66**
**D-8902 Neusäss (DE)**

(74) Vertreter : **Rehberg, Elmar, Dipl.-Ing. et al**
**Patentanwälte, Dipl.-Ing. R. Bibrach Dipl.-Ing. E.**
**Rehberg Postfach 7 38 Pütterweg 6**
**D-3400 Göttingen (DE)**

## Beschreibung .

Die Erfindung bezieht sich auf ein Auslesegerät für mikroskopische Objekte, insbes. Mikrofossilien, mit einem Gehäuse mit einer in ihrem Zentrum ein Loch aufweisenden Deckplatte und einem darüber angeordneten Mikroskop, wobei unter der Deckplatte ein Schlitten verschiebbar gelagert ist, auf dem mehrere Zellen zur Aufnahme der jeweiligen Objekte angeordnet sind. Das Gerät kann beim Auslesen von Sedimentproben nach Mikrofossilien eingesetzt werden, die zur Altersbestimmung von Sedimenten häufig herangezogen werden. Darüber hinaus können aber auch alle Bereiche bedient werden, wo mikroskopische Objekte etwa in einer Größenordnung zwischen 0,1 bis 5 mm manuell unter einem Mikroskop sortiert und bestimmt werden müssen. Dies ist z. B. in Labors der Erdölindustrie, in geologischen oder mineralogischen Instituten, in land- und forstwirtschaftlichen Versuchsanstalten sowie in der Zoologie und der Botanik möglich.

Ein Auslesegerät der eingangs beschriebenen Art ist aus der Paläontologischen Zeitschrift Nr. 50, November 1976, S. 222-225 bekannt. Dort ist unter der Deckplatte mit dem Loch ein manuell in X-Richtung verschiebbarer Schieber oder Schlitten vorgesehen, der zwischen zwei Anschlägen hin und herbewegt werden kann. Auf dem Schieber sind zwei Mikrozellen angeordnet, so daß sich die eine Mikrozelle unter dem Loch der Deckplatte befindet, wenn der Schieber an seinem einen Anschlag anliegt. Entsprechendes gilt für die andere Mikrozelle. Damit ist es möglich, beim Auslesen der mikroskopischen Objekte diese in zwei Sorten oder jedenfalls zwei Teile zu unterteilen, wobei dann jede Sorte oder jedes Sortenbündel in der jeweiligen Mikrozelle abgelagert wird. Dies geschieht dadurch, daß das ausgelesene Objekt durch das Loch der Deckplatte in die darunter befindliche Mikrozelle fallengelassen wird. Da auszulesende mikroskopische Objekte in der Regel nicht nur zwei Sorten, sondern eine Vielzahl von Sorten bilden, müssen die Auslesevorgänge mit dem bekannten Gerät mehrmals wiederholt werden, um eine Aufteilung in zwei, vier, sechs oder acht usw. Sorten zu erzielen. Dies ist äußerst zeitraubend. So wurde auch bereits vorgeschlagen, anstelle der zwei Zellen drei Mikrozellen am Schlitten nebeneinander unterzubringen. Damit muß die Mittelstellung durch eine weitere Arretierung definiert werden. An sich bietet sich die Vergrößerung der Anzahl der Mikrozellen bei dem bekannten Gerät an. Dies führt aber nicht einmal dann, wenn die Zellen, wie bekannt, nur in einer Richtung hintereinander angeordnet werden, zu befriedigenden Ergebnissen. Es kam vielmehr zu Verwechslungen jeweils benachbarter Zellen. Außerdem traten beim Ein- und Ausrasten in den Mittelstellungen auch bei vorsichtigem Arbeiten so große Verzögerungs- und Beschleunigungskräfte auf, daß besonders kugelige Objekte gelegentlich dabei aus der Mikrozelle herausgeschleudert wurden bzw. heraussprangen. Verringert man dagegen die Federspannung der Rastelemente, dann sind die Raststellungen nicht mehr mit der erforderlichen Genauigkeit anfahrbar, so daß sich bei einem diesbezüglichen Fehler die betreffende Mikrozelle mit dem Loch in der Deckplatte nur unvollkommen deckt.

Die FR-A 1 254 953 zeigt eine Vorrichtung zum Sortieren bzw. Kalibrieren von unregelmäßig geformten Gegenständen, insbesondere Austern, die auf einem Schwingförderer vereinzelt zu einer Abwurfstelle gefördert werden. Die Austern durchfallen im freien Fall ein Prüffeld, in welchem drei Anordnungen aus je einer Strahlenquelle und einer Fotozelle räumlich in entsprechenden Winkeln zueinander so angeordnet sind, daß sich über die Abschattung der jeweiligen Fotozellen eine Aussage über die Größe der Gegenstände machen läßt. Es ist eine Aufnahmeplatte vorgesehen, die auf einem Schlitten gelagert ist. Der Schlitten kann mittels eines Antriebs in der einen, z. B. in der X-Richtung, verschiebbar sein, während die Aufnahmeplatte auf dem Schlitten dann in der anderen, beispielsweise in der Y-Richtung, verschiebbar ist. In der Aufnahmeplatte sind Löcher vorgesehen, an die Schläuche angeschlossen sind, die jeweils in Aufnahmebehälter für die sortierten Gegenstände führen. Mit Hilfe zweier getrennter Antriebe kann die Aufnahmeplatte so positioniert werden, daß der betreffende Gegenstand dann entsprechend seiner Größe in die zugehörige Durchbrechung der Aufnahmeplatte einfällt. Diese bekannte Vorrichtung ist nur dann einsetzbar, wenn die zu sortierenden bzw. kalibrierenden Gegenstände unterschiedliche Größe aufweisen. Die Sortierung erfolgt der Größe nach. Beim Auslesen von Sedimentproben von Mikrofossilien geht es oft darum, etwa gleich große Gegenstände nach anderen Kriterien als der Größe, z. B. nach der jeweiligen Art, zu sortieren. Hierzu ist die bekannte Vorrichtung nicht geeignet.

Der Erfindung liegt deshalb die Aufgabe zugrunde, ein Auslesegerät der eingangs beschriebenen Art aufzuzeigen, mit dem die Aufteilung von mikroskopischen Objekten unter dem Mikroskop zuverlässig in eine Mehrzahl von Komponenten beispielsweise in der Größenordnung von 20 bis 100 Komponenten, also z. B. biologische Arten, Mineralienarten usw. zuverlässig erfolgen kann.

Erfindungsgemäß wird dies dadurch erreicht, daß auf dem in X-Richtung verschiebbaren Schlitten eine in Y-Richtung verschiebbare Aufnahmeplatte gelagert ist und je ein Schrittmotor für den Schlitten und die Aufnahmeplatte zum jeweiligen Verschieben vorgesehen sind, und daß zur Aufnahme der jeweiligen Objekte eine Komponentenplatte mit einer Zellenmatrix vorgesehen ist, die mit der Aufnahmeplatte verbindbar ist. Hierdurch wird die Aufnahmeplatte und damit auch die die Zellenmatrix tragende Komponentenplatte in X-und in Y-Richtung gegenüber dem Loch in der Deckplatte verschiebbar, und zwar reproduzierbar verschiebbar mit sehr hoher Genauigkeit. Mechanische Anschläge für die einzelnen Positionen kommen vorteilhaft in Fortfall. Durch das aufgezeigte Auslesegerät besteht die Möglichkeit, die Zuverlässigkeit in der Weise zu steigern, daß die Antriebe über ein Rechenprogramm gesteuert werden, wobei auf einem angeschlossenen Bildschirm jeweils die Zelle kenntlich gemacht wird, die sich gerade unter dem Loch der Deckplatte befindet. Auch die Verfahrgeschwindigkeit kann auf diese Art und Weise leicht gesteuert und den Gegebenheiten angepaßt werden, so daß es letztlich möglich ist, auch relativ weite Wege beim Verfahren der Komponentenplatte in einer Zeit der Größenordnung einer Sekunde zurückzulegen. Dies verkürzt die beim Auslesen von mikroskopischen Objekten erforderliche Zeit ganz erheblich. Es ist auch möglich, das Auslesegerät als Kreuztisch zu benutzen. Anstelle der Komponentenplatte mit Zellmatrix ist dann eine Halterung vorgesehen und mit der Aufnahmeplatte verbindbar, in die z. B. ein Dünnschliff eingesetzt werden kann. Durch die getrennt steuerbaren Antriebe ist eine beliebige Schrittweite vorwählbar, so daß auf diese Weise positionsgenau die Auswertung erfolgen kann. Der Dünnschliff wird jeweils um den gewählten Schritt zeilen- und spaltenweise weiterbewegt.

Vorteilhaft können als Antriebe zwei Schrittmotore vorgesehen sein, die durch die Steuereinrichtung auch gleichzeitig betätigt werden können. Mit Hilfe der Schrittmotore und der Steuereinrichtung sowie eines Rechenprogramms ist es möglich, das Auslesegerät so zu betreiben, daß sich beim Aufsetzen einer Komponentenplatte mit anderen Abmessungen die Steuereinrichtung die erforderlichen Schrittweiten zum Anfahren der einzelnen Zellen der Matrix selbst ausrechnet und beim Verfahren von einer Position in die andere dann auswählt. Die Schrittmotore lassen sich mit einem einfachen Seilantrieb mit den zu bewegenden Teilen verbinden, also einmal mit dem Schlitten und zum anderen mit der Aufnahmeplatte.

Die Komponentenplatte ist mit der Aufnahmeplatte durch eine Steckverbindung rutschsicher verbindbar, damit beim Auftreten von Beschleunigungs- und Verzögerungskräften beim Verfahren keine Relativbewegung zwischen Aufnahmeplatte und Komponentenplatte stattfindet.

Es ist auch möglich, daß mehrere Komponentenplatten mit unterschiedlicher Anzahl Zellen vorgesehen sind. Auch kann die Zellengröße variieren. So sind beispielsweise in der Mikrobiologie gebräuchliche Mikrotiterplatten mit bis zu 96 Zellen ohne Weiteres verwendbar.

Der Antrieb kann eine Steuereinrichtung mit variabler Schrittweite entsprechend der Zellenmatrix aufweisen, so daß die einzelnen Zellen durch entsprechende Steuerbefehle, beispielsweise über eine Schreibmaschinentastatur, ausgelöst werden können.

Die Erfindung wird anhand eines bevorzugten Ausführungsbeispiels weiter beschrieben. Es zeigen :

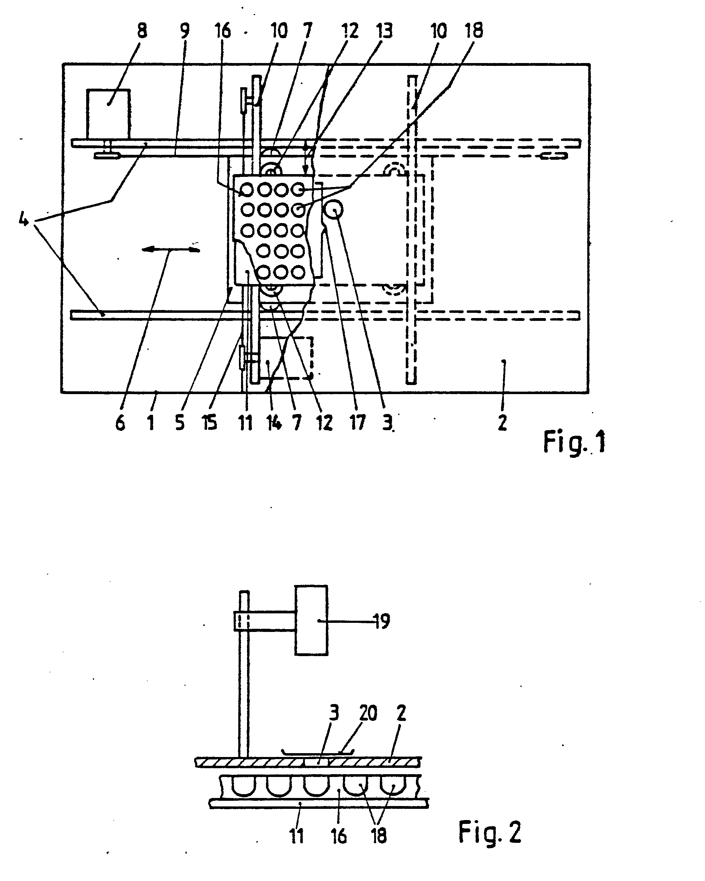

Fig. 1 eine Draufsicht auf den wesentlichen Teil des Auslesegerätes und

Fig. 2 eine Einzelheit mit Vertikalschnitt.

Das Auslesegerät weist ein Gehäuse 1 auf, welches die Form eines Kastens besitzt und auf seiner Oberseite von einer Deckplatte 2 abgedeckt ist, die etwa in ihrem Zentrum ein Loch 3 aufweist. In dem Gehäuse 1 sind zwei Führungsstangen 4 ortsfest gelagert, die zur Führung eines Schlittens 5 in X-Richtung gemäß Pfeil 6 dienen. Der Schlitten 5 ist über kugelgelagerte Laufrollen 7 an den Führungsstangen 4 in X-Richtung verfahrbar. Zum Verfahren dient ein Schrittmotor 8, dessen Antriebsrad über einen Seilzug 9 an dem Schlitten 5 angreift.

Auf dem Schlitten 5 sind Führungsstangen 10 vorgesehen. Eine Aufnahmeplatte 11 ist mit Hilfe von Laufrollen 12 in Richtung des Pfeils 13, also in Y-Richtung gegenüber den Führungsstangen 10 verfahrbar. Zum Verfahren dient ein Schrittmotor 14, der an der Führungsstange 10 bzw. auf dem Schlitten 5 gelagert ist und der über einen Seilzug 15 an der Aufnahmeplatte 11 angreift. Somit ist die Aufnahmeplatte 11 durch gleichzeitige oder auch getrennte Betätigung der Schrittmotoren 8 und 14 gleichzeitig oder nacheinander in X- und in Y-Richtung verfahrbar. Auf die Aufnahmeplatte 11 können wahlweise mehrere Komponentenplatten 16 unverrutschbar aufgesteckt werden, die jeweils eine Matrix 17 aus Zellen 18 aufweisen. Unter den Zellen 18 sind napfartige Vertiefungen in der Komponentenplatte 16 zu verstehen, die nach Art der Matrix 17 zeilen- und spaltenweise in X- und in Y-Richtung angeordnet sind. Es versteht sich, daß die Zellen 18 unterschiedliche Größe und unterschiedlichen Abstand — je nach Anwendungszweck — aufweisen können. So können z. B. 8 Reihen und 12 Spalten, also insgesamt 96 Zellen 18 auf einer Komponentenplatte 16 vorgesehen sein.

Wie Fig. 2 erkennen läßt, ist oberhalb der Deckplatte 2 ein Mikroskop 19 so angeordnet, daß das Loch 3 der Deckplatte 2 im Blickfeld des Mikroskops liegt. Es findet meist eine Schale 20 Verwendung, in welcher sich die zu sortierenden mikroskopischen Objekte befinden. Nach der Bestimmung jedes einzelnen Objektes wird dieses durch das Loch 3 der Deckplatte 2 fallengelassen, nachdem vorher die betreffende Zelle 18 der Komponentenplatte 16, in welcher das betreffende Objekt abgelagert werden soll, unter das Loch 3 gefahren worden ist. Gehört das nächste zu sortierende Objekt zu einer anderen Sorte, also einer Sorte, die in einer anderen Zelle 18 abgelagert und gesammelt werden soll, dann wird die Aufnahmeplatte 11 mit der Komponentenplatte 16 so verfahren, daß die betreffende andere Zelle 18 unter dem Loch 3 erscheint.

## Patentansprüche

1. Auslesegerät für mikroskopische Objekte, insbesondere Mikrofossilien, mit einem Gehäuse mit einer in ihrem Zentrum ein Loch aufweisenden Deckplatte und einem darüber angeordneten Mikroskop, wobei unter der Deckplatte ein Schlitten verschiebbar gelagert ist, auf dem mehrere Zellen zur Aufnahme der jeweiligen Objekte angeordnet sind, gekennzeichnet durch die Kombination, daß auf dem in X-Richtung (6) verschiebbaren Schlitten (5) eine in Y-Richtung (13) verschiebbare Aufnahmeplatte (11) gelagert ist und je ein Schrittmotor (8 bzw. 14) für den Schlitten (5) und für die Aufnahmeplatte (11) zum jeweiligen Verschieben vorgesehen ist, und daß zur Aufnahme der jeweiligen Objekte eine Komponentenplatte (16) mit einer Zellenmatrix (17) vorgesehen ist, die mit der Aufnahmeplatte (11) verbindbar ist.

2. Auslesegerät nach Anspruch 1, dadurch gekennzeichnet, daß die Komponentenplatte (16) mit der Aufnahmeplatte (11) durch eine Steckverbindung rutschsicher verbindbar ist.

3. Auslesegerät nach Anspruch 1 und 2, dadurch gekennzeichnet, daß mehrere Komponentenplatten (16) mit unterschiedlicher Anzahl Zellen (18) vorgesehen sind.

4. Auslesegerät nach Anspruch 1 bis 3, dadurch gekennzeichnet, daß der Antrieb eine Steuereinrichtung mit variabler Schrittweite entsprechend der Zellenmatrix aufweist.

## Claims

1. Selection apparatus for microscopic objects, in particular micro-fossils, having a casing with a cover plate which has a hole in its centre and a microscope arranged above it, under the cover plate there being moveably mounted a slide, on which a number of cells are arranged for receiving the respective objects, caracterized by the combination that, mounted on the slide (5), which can be moved in the X-direction (6), is a receiving plate (11), which can be moved in the Y-direction (13), and one stepping motor each (8 and 14, respectively) is provided for the slide (5) and for the receiving plate (11) for the respective sliding, and in that, for receiving the respective objects, a component plate (16) with a cell matrix (17) is provided, which can be connected to the receiving plate (11).

2. Selection apparatus according to claim 1, characterized in that the component plate (16) can be connected secure from slipping to the receiving plate (11) by a plug connection.

3. Selection apparatus according to claims 1 and 2, characterized in that several component plates (16) with different numbers of cells (18) are provided.

4. Selection apparatus according to claims 1 to 3, characterized in that the drive has a control device with variable step size according to the cell matrix.

## Revendications

1. Appareil destiné au tri d'objets microscopiques, en particulier de micro-fossiles, comportant un corps muni d'une plaque de couverture présentant un trou en son centre, et un microscope disposé au-dessus de celui-ci, un coulisseau étant installé sous la plaque de couverture, sur lequel sont disposées plusieurs cellules destinées à recevoir les objets considérés, caractérisé par la combinaison consistant en ce que sur le coulisseau (5) susceptible de se déplacer par translation dans la direction X (6) est montée une plaque de réception (11) susceptible de se déplacer par translation dans la direction Y (13) et qu'est prévu un moteur pas à pas (8) pour le coulisseau et respectivement un moteur pas à pas (14) pour la plaque de réception (11) en vue du déplacement par translation considéré, et en ce que, pour recevoir les objets considérés, il est prévu une plaque à composants (16) comportant une matrice de cellules (17), laquelle plaque peut être reliée à la plaque de réception (11).

2. Appareil de tri selon la revendication 1, caractérisé par le fait que la plaque à composants (16) est reliée à la plaque de réception (11) au moyen d'une liaison enfichable éliminant les risques de glissement.

3. Appareil de tri selon la revendication 1 ou 2, caractérisé par le fait qu'il est prévu plusieurs plaques à composants (16) comportant un nombre différent de cellules (18).

4. Appareil de tri selon la revendication 1 ou 2, caractérisé par le fait que l'entraînement du dispositif de commande présente une amplitude variable de pas qui correspond à la matrice de cellules.

Fig. 1

Fig. 2